# EUROPÄISCHE PATENTANMELDUNG

(11) **EP 2 366 909 A1**
(43) Veröffentlichungstag der Anmeldung: **21.09.2011**
(21) Anmeldenummer: 10155144.8
(22) Anmeldetag: 02.03.2010
(51) Int. Cl.: F16B 5/00, F16B 11/00

(54) **Verbindungsanordnung für Holzwerkstücke oder holzähnliche Werkstücke, Elemente für eine solche Verbindungsanordnung und Verfahren zum Verbinden von Holzwerkstücken oder holzähnlichen Werkstücken**

(71) Anmelder: Renggli AG, 6247 Schötz (CH)
(72) Erfinder: Renggli, Max, 6247 Schötz (CH)
(74) Vertreter: Schmauder & Partner AG Patent- & Markenanwälte VSP

(57) **Zusammenfassung**

Um eine vorteilhafte Verbindungsanordnung für Holzwerkstücke auszubilden, wird vorgeschlagen, dass eine erste Platte (10) eine im Wesentlichen als Abschlussfläche ausgebildete Seitenfläche (12) aufweist, und in eine zweite Platte (20) eine Aufnahmenut (22) mit der Dicke der ersten Platte (10) eingearbeitet ist, so dass die erste Platte (10) an einer ihrer Seiten in die Aufnahmenut (22) aufgenommen werden kann und die Unterseite (24) der Aufnahmenut (22) mit der Seitenfläche (12) eine Klebefläche ausbildet. In der ersten Platte (10) ist in der Nähe der Kanten (13) der aufzunehmenden Seitenfläche (12) jeweils eine Einklicknut (14) längs der Seitenfläche (12) eingearbeitet. In der zweiten Platte (20) ist in den Seitenflächen (16) der Aufnahmenut (22) jeweils eine Ausbuchtung (28) längs der Aufnahmenut (22) ausgebildet. Die Einklicknut (14) der ersten Platte kann die Ausbuchtung (28) der zweiten Platte (20) aufnehmen.

## Beschreibung

### Technisches Gebiet

Die Erfindung betrifft eine Verbindungsanordnung für Holzwerkstücke oder holzähnliche Werkstücke, Elemente für eine solche Verbindungsanordnung sowie ein Verfahren zum Verbinden von Holzwerkstücken oder holzähnlichen Werkstücken.

### Stand der Technik

Herkömmlich werden Holzteile mittels Leim- oder Klebemitteln und/oder mit Hilfsmitteln wie Schrauben Dübel etc. miteinander verbunden. Dabei haben Schraubverbindungen grundsätzliche Nachteile in Bezug auf den Aufwand, aus ästhetischen Gründen und anderes mehr.

Unter Holzteilen soll im Sinne der vorliegenden Erfindung alle Teile aus Holz oder holzähnlichen Materialien, einschliesslich Kunststoffen verstanden werden.

Bei Leim- und Klebeverbindungen stellen sich zunächst einmal gewisse Probleme in Bezug auf die Festigkeit der Verbindung ein, die grundsätzlich durch eine Auswahl des Leim- oder Klebemittels, auf die Grösse der Leim- oder Klebefläche sowie durch eine sorgfältige Verbindung der Leim- oder Klebefläche mit der entsprechenden Gegenfläche gelöst werden können. Für eine solche Verbindung ist es dabei einerseits notwendig, die Leim- oder Klebeflächen - je nach Art des Leim- oder Klebemittels - mit einem gewissen Anpressdruck für eine bestimmte Aushärtzeit präzise zusammenzubringen.

Wenn nun Holzwerkstücke z.B. Bretter oder Platten sind, die in einem annähernd rechten Winkel so aneinandergebracht werden sollen, dass eine Kante einer der Platten auf die Fläche der anderen Platte fest - also durch eine Leim-und Klebeverbindung - präzise angeordnet werden soll, so ist es allgemein üblich, in die Fläche der (anderen) Platte eine Nut einzuarbeiten, vorzugsweise einzufräsen, in die die Kante der ersten Platte eingesetzt wird. Auf diese Weise ist einerseits die Position der Verbindung vorgegeben und andererseits bildet die Kantenfläche der ersten Platte mit der Unterseite der Nut eine wohl definierte Leim- oder Klebefläche.

Zwar ist das vorgenannte Verfahren nicht nur wohlbekannt, sondern auch grundsätzlich geeignet, es ergeben sich dabei aber noch eine Reihe von Problemen, die es zu lösen gilt. Einerseits ist es schon gar nicht einfach, die beiden Teile, die miteinander in der vorstehend beschriebenen Art verbunden werden sollen, zum Leim- oder Klebevorgang präzise - also z.B. mit einer wohl definierten Eintauchtiefe in die Nut - einzusetzen, insbesondere wenn zuvor die Leim- oder Klebemittel aufgebracht wurden. Andererseits ist es - insbesondere bei längeren Verbindungen von z.B. einem Meter bis sogar 30 m nicht einfach, den Anpressdruck ohne geeignete Pressanlage beim Aushärten über die ganze Länge konstant zu halten. Wird der Anpressdruck aber nicht konstant gehalten, so ist es - insbesondere bei aufschäumenden Klebemitteln, bei denen das Klebevolumen beim Aushärten die Tendenz hat, sich auszudehnen - möglich, dass die Verbindung nicht über die gesamte Verbindungslänge präzise bleibt.

Weiterhin gibt es Verbindungssysteme für Holzwerkstücke, denen teilweise der gleiche Denkansatz zu Grunde liegt, wie in den vorstehenden Anforderungen beschrieben. So beschreibt beispielsweise die EP 1 024 234 A1 eine ganze Reihe von Nut/Kamm-Geometrien für Klickverbindungen. Allerdings ist der Anwendungsbereich klar auf Bodenbeläge und damit insbesondere auf seitliche, zumeist klebefreie Verbindungen eingeschränkt. Eine Übertragung solcher Verbindungsmethoden auf eine Verbindung gemäss den Anforderungen an die vorliegende Erfindung scheint schon wegen völlig unterschiedlichen Symmetriebedingungen ausgeschlossen. Immerhin weist die Verbindungsanordnung der EP 1 024 234 A1 schon die Eigenschaften auf, dass eine schnellere Weiterverarbeitung möglich ist, da das dortige Klicksystem selber eine gewisse Last aufnehmen kann, eine einfache Positionierung möglich ist und die Verklebung durch ein Klick-System unterstützt wird, da sich ein gewisser Pressdruck aufbauen lässt. In Verbindung mit aufschäumendem Klebstoff haben sich die Verbindungsanordnungen allerdings als unzuverlässig und damit als unbrauchbar herausgestellt, wenn sie nicht für seitliche Verbindungen wir bei Fussbodenbelägen eingesetzt werden.

### Darstellung der Erfindung

Eine Aufgabe der Erfindung ist es, eine vereinfachte, aber insbesondere zuverlässige Verbindungsanordnung für Holzwerkstücke oder holzähnliche Werkstücke bereit zu stellen. Weiterhin ist es eine Aufgabe der Erfindung, ein Verfahren zum Verbinden von Holzwerkstücken oder holzähnlichen Werkstücken vorzuschlagen.

Diese Aufgabe der Erfindung wird durch eine Verbindungsanordnung für Holzwerkstücke oder holzähnliche Werkstücke nach Anspruch 1 gelöst. Dabei haben die Massnahmen der Erfindung zunächst einmal zur Folge, dass ein einfaches Zusammensetzen der Werkstücke mit hoher, im Wesentlichen nur von der Präzision und der sorgfältigen Ausführung der vorangegangenen Fräsarbeiten abhängenden Genauigkeit möglich ist.

Die Verbindungsanordnung für Holzwerkstücke oder holzähnliche Werkstücke gemäss der vorliegenden Erfindung zeichnet sich insbesondere auch dadurch aus, dass keine weiteren Hilfsmittel wie z.B. Mittel zum Erzeugen eines Anpressdruckes - z.B. Spannzangen oder Schrauben etc. - erforderlich sind. Weiterhin zeichnet sich die Verbindungsanordnung für Holzwerkstücke oder holzähnliche Werkstücke gemäss der vorliegenden Erfindung dadurch aus, dass während des Härtungsvorganges die Beibehaltung der Positionen der Holzwerkstücke oder holzähnlichen Werkstücke gegeneinander gewährleistet wird. Insbesondere bei aufschäumenden Klebstoffen - wie z.B. bei einkomponentigen, feuchtigkeitshärtenden Polyurethanen - bestand nämlich bei den herkömmlichen Verbindungsanordnungen die Gefahr, dass das eine Holzwerkstück aus der Nut des anderen Holzwerkstückes durch den aufschäumenden Kleber teilweise herausgedrückt wurde.

Eine quasi umgekehrte Lösung wird in Anspruch 2 angegeben. Diese Massnahmen lassen zunächst einmal keinen Unterschied zur vorstehend definierten Lösung der Aufgabe der Erfindung vermuten. Allerdings ergeben sich insbesondere für die Ausbildung einer Ausbuchtung an der Seitenfläche, z.B. über die Ebene des Werkstückes hinaus einige Veränderungen der Herstellbedingungen, da dann ein Ausbringen der Ausbuchtungen näher liegt als ein Fräsvorgang.

Besonders vorteilhaft ist eine Ausführung der Erfindung, bei der eine Verbindungsanordnung zum Einsatz kommt, wenn an der Abschlussfläche, also der aufzunehmenden Seitenfläche der ersten Platte Mittel ausgebildet sind, mit denen eine erhöhte Flexibilität der Bereiche gewährleistet ist, in denen jeweils die Einklicknut oder Einbuchtung bzw. die Ausbuchtung ausgebildet sind. Diese vorteilhaften Massnahmen können insbesondere dadurch bewirkt werden, dass Entlastungsnuten in der Abschlussfläche ausgebildet sind. Diese Entlastungsnuten machen den Bereich der Einklicknut oder Einbuchtung bzw. der Ausbuchtung leicht federnd und erleichtern das Zusammensetzen. Diese Massnahmen haben aber noch einen anderen, unerwarteten Vorteil. Sie wirken nämlich als Puffer zu allenfalls überschüssiges Klebemittel und weiterhin als Puffer für eine überschüssige Ausdehnung des Klebemittels beim Aushärten, sofern - wie dies vorzugsweise der Fall ist - ein aufschäumendes Klebemittel verwendet wird.

Weiterhin sehr vorteilhaft ist eine Ausgestaltung der Verbindungsanordnung, wenn die erste Platte zwischen der Seitenfläche und der Einklicknut oder Einbuchtung bzw. der Ausbuchtung über die Länge der Seitenfläche verjüngend angefast ist und wenn zudem noch die zweite Platte zwischen der Ausbuchtung bzw. der Einklicknut oder Einbuchtung und der Plattenoberfläche öffnend angefast ist.

Zwar tritt die vorteilhafte Wirkung der Erfindung dann ein, wenn die entsprechenden Massnahmen an beiden Werkstücken durchgeführt werden. Die Vorteile der Erfindung können jedoch teilweise auch ausgenutzt werden, wenn jeweils nur an einem der Werkstücke die Massnahmen der Erfindung vollumfänglich ausgebildet sind und am entsprechenden Gegenstück lediglich ähnliche Massnahmen (z.B. Noppen an Stelle eine Ausbuchtung oder Löcher an Stelle einer Einklicknut) ergriffen werden. Dieser Sachzusammenhang wird durch die auf die Elementansprüche wiedergegeben.

Der Aspekt der vorliegenden Aufgabe, eine Verbindung herzustellen, wird durch das Verfahren gemäss Anspruch 12 bzw. Anspruch 13 gelöst. Diese Massnahmen haben insbesondere zur Folge, dass das Zusammensetzen und der Klebevorgang einschliesslich des Aushärtens sehr einfach durchgeführt werden kann.

Die vorbenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können. Insbesondere sind unter holzähnlichen Materialien auch Kunststoffe, aber auch andere Materialien zu verstehen, die solche Eigenschaften haben, dass die Massnahmen der Erfindung mit ihnen ausführbar sind. Weiterhin sind mit Platten alle flächigen Elemente gemeint, die zu den Elementen der Erfindung bearbeitet werden können, insbesondere auch Bretter, Platten mit einer konvexen oder konkaven Oberfläche etc.

Die vorstehend beschriebene Erfindung wurde für den Fall beschrieben, dass das mit seiner Seitenfläche in die Aufnahmenut des anderen Werkstückes einzusetzende Werkstück mit diesem einen rechten Winkel bildet. Dies ist jedoch offensichtlich nicht notwendig. Einerseits kann die Aufnahmenut im zweiten Werkstück schräg ausgebildet sein, andererseits kann aber auch die Seitenfläche des ersten Werkstückes abgeschrägt sein, um z.B. eine Verbindung mit einem Winkel von 40° bis annähernd 90° zu ermöglichen. Weiterhin wurde im vorstehenden davon ausgegangen, dass die Aufnahmenut und die Seitenfläche eben sind. Auch dies ist nicht notwendig. Problemlos kann die Seitenfläche konkav und die Aufnahmenut konvex ausgebildet sein oder umgekehrt, um z.B. die Auflagefläche geometrisch zu erhöhen und/oder um den Vorgang des Einklickens - bei vorgegebener Geometrie - zu erleichtern.

### Kurze Beschreibung der Zeichnungen

Weitere Einzelheiten, Vorteile und Merkmale des Gegenstandes der vorliegenden Erfindung ergeben sich aus der nachfolgenden Beschreibung der dazu gehörenden Zeichnungen, in denen - beispielhaft - erfindungsgemässe Vorrichtungen erläutert werden. In den Zeichnungen zeigt:
- Figur 1: eine Darstellung der Elemente zum Verbinden von Holzwerkstücken, holzähnlichen Werkstücken oder Kunststoffteilen gemäss einem bevorzugten Ausführungsbeispiel der vorliegenden Erfindung;
- Figur 2: eine Darstellung gemäss Figur 1, bei dem die Elemente ineinander eingesetzt und möglicherweise bereits mit Leim- oder Klebemitteln verbunden sind;
- Figur 3 a bis d: den Vorgang des Verbindens der Elemente gemäss Figur 1 und 2.

### Wege zur Ausführung der Erfindung

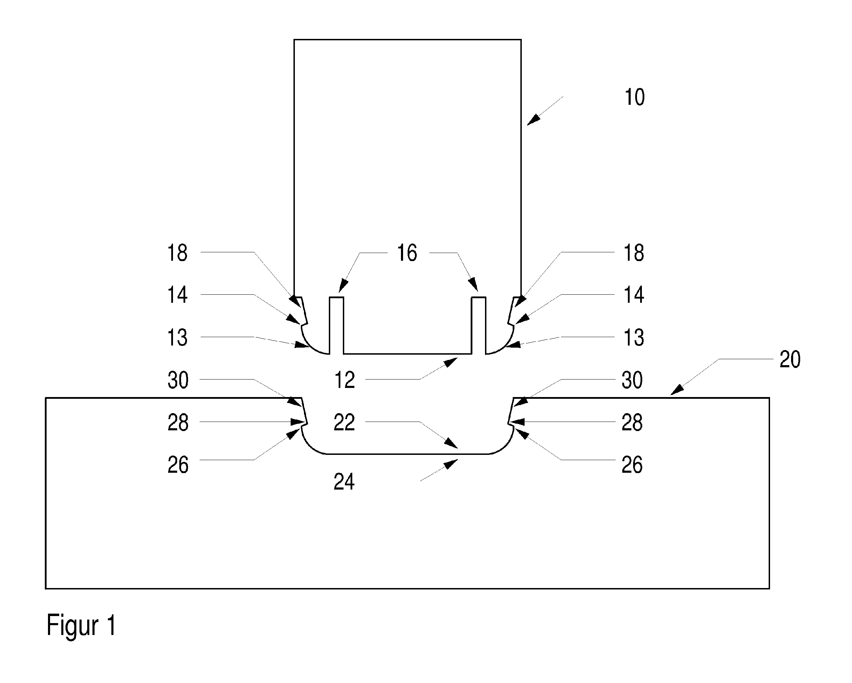

Die in Figur 1 dargestellte Verbindungsanordnung für Holzwerkstücke umfasst eine erste Platte 10. Diese weist eine im Wesentlichen als Abschlussfläche ausgebildete Seitenfläche 12 auf. In dieser ersten Platte 10 ist in der Nähe der Kanten 13 der aufzunehmenden Seitenfläche 12 auf beiden Flächen jeweils eine Einklicknut 14 längs der Seitenfläche 12 eingearbeitet.

Weiterhin ist in Figur 1 eine zweite Platte 20 dargestellt, in die eine Aufnahmenut 22 mit der Dicke der ersten Platte 10 eingearbeitet ist, so dass die erste Platte 10 an einer ihrer Seiten in die Aufnahmenut 22 aufgenommen werden kann. Die Unterseite 24 der Aufnahmenut 22 bildet gemeinsam mit der Seitenfläche 12 eine Klebefläche aus. In der zweiten Platte 20 ist in den Seitenflächen 16 der Aufnahmenut 22 jeweils eine Ausbuchtung 28 längs der Aufnahmenut 22 derart ausgebildet, dass sie die Einklicknut 14 der ersten Platte in die genannte Ausbuchtung 28 der zweiten Platte 20 aufnehmen kann.

An der aufzunehmenden Seite der ersten Platte 10 sind Entlastungsnuten 16 ausgebildet, mit denen eine erhöhte Flexibilität der Bereiche gewährleistet ist. Dies bewirkt einerseits, dass die Einklicknuten 14 in Relation zur Oberfläche der Platte 10 flexibel, in diesem Fall also leicht federnd ausgebildet sind. Weiterhin bewirken die Entlastungsnuten 16, dass ein Puffer für allenfalls überschüssiges Klebemittel und weiterhin ein Puffer für eine überschüssige Ausdehnung des Klebemittels beim Aushärten zur Verfügung steht, was sich insbesondere als vorteilhaft herausgestellt hat, wenn ein aufschäumendes Klebemittel, im bevorzugten Ausführungsbeispiel ein Polyurethankleber, verwendet wird.

Im hier beschriebenen Ausführungsbeispiel ist die erste Platte 10 zwischen der Seitenfläche 12 und der genannten Einklicknut 14 über die Länge der Seitenfläche 12 verjüngend angefast. Diese Anfasung 18 weist im Ausführungsbeispiel einen Winkel gegenüber der Oberfläche von ca. 15° auf. Kleinere Winkel (ab 1-2°) oder grössere Winkel bis zu ca. 30° können aber auch vorteilhaft sein. Weiterhin ist im hier beschriebenen Ausführungsbeispiel auch die zweite Platte 20 zwischen der Ausbuchtung 28 und der Plattenoberfläche öffnend angefast 30. Auch diese Anfasung 18 weist im Ausführungsbeispiel einen Winkel gegenüber der Plattenoberfläche von ca. 15° auf. Auch hier können kleinere Winkel (ab 1-2°) oder grössere Winkel bis zu ca. 30° vorteilhaft sein.

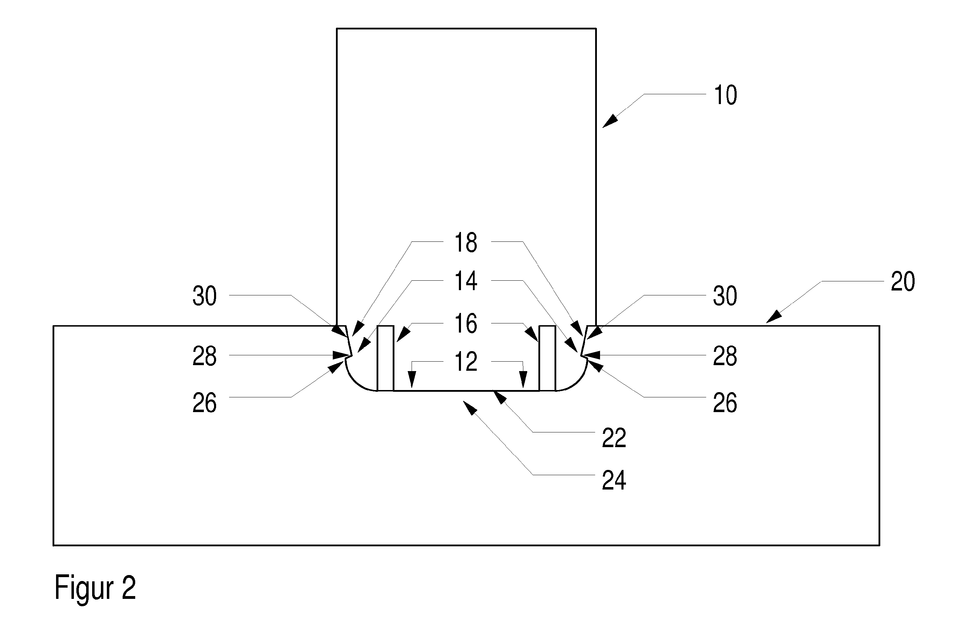

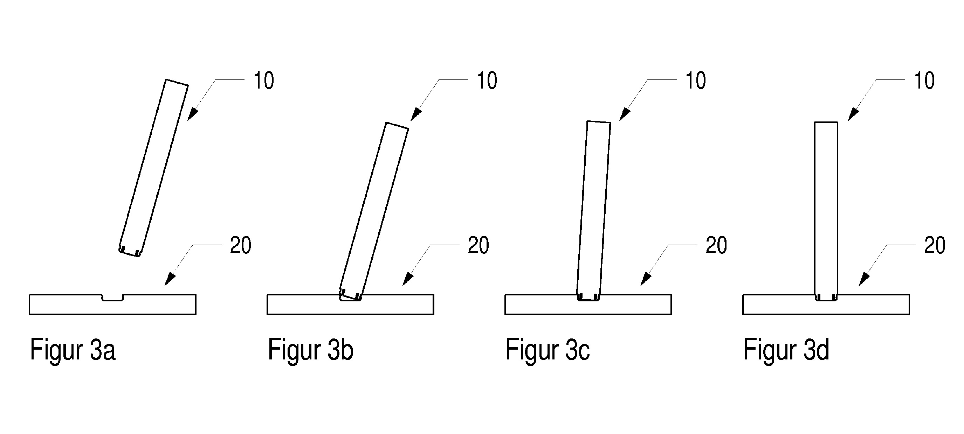

In Figur 2 sind die beiden Platten 10 und 20 miteinander verbunden dargestellt. Wie dieses Verbinden erfindungsgemäss vorgesehen ist, wird nachfolgend - an Hand der Figuren 3a bis 3d - beschrieben.

Die beiden plattenförmigen Holzwerkstücke 10, 20 werden im hier beschriebenen Ausführungsbeispiel zunächst einmal an der Seitenfläche 12 des ersten Holzwerkstücks 10 sowie an der Unterseite 24 der Aufnahmenut 22 des zweiten Holzwerkstücks 20 oder holzähnlichen Werkstücks mit einem Klebemittel, im hier beschriebenen Ausführungsbeispiel mit eines aufschäumenden Polyurethankleber, beaufschlagt. Das beaufschlagen kann alternativ auch einseitig erfolgen. Dann wird das erste Holzwerkstück 10 mit einer Kante 13 der Seitenfläche derart in die Aufnahmenut 22 des zweiten Holzwerkstücks 20 eingesetzt, dass eine der Ausbuchtungen 28 des zweiten Holzwerkstücks 20 in eine der Einklicknuten 14 des ersten Holzwerkstücks 10 eingreift oder zumindest an ihr anliegt. Dann wird das erste Holzwerkstück 10 - unter Ausnutzung des flexiblen Federeffektes der Entlastungsnuten 16 derart verkantet, dass die andere Ausbuchtung 28 des zweiten Holzwerkstücks 20 in die andere Einklicknut 14 des ersten Holzwerkstücks 10 oder holzähnlichen Werkstücks einklickt.

Anschliessend wird - im hier beschriebenen Ausführungsbeispiel unter Mitwirkung von Wasserdampf aus den Holzwerkstücken - der Polyurethankleber ausgehärtet und die Verbindung ist fertig.

Im vorliegenden Ausführungsbeispiel wurden - eher beispielhaft - Sperrholzplatten verwendet. Andererseits können mit dem erfinderischen Verfahren - wie sich in Versuchen herausgestellt hat - auch andere Platten wie Pressspanplatten, andere Verbundplatten mit Kunststoffen, Kunststoffplatten und sogar Keramikplatten oder Metallplatten miteinander verbunden werden, wenn sie nur bezüglich der hier wesentlichen Teile ähnliche Materialeigenschaften aufweisen.

In einer in den Zeichnungen nicht dargestellten alternativen Ausführungsform ist die Einklicknut in den Seitenflächen der Aufnahmenut ausgebildet und entsprechende Ausbuchtungen sind an den Seiten längs der Aufnahmeflächen der anderen Platte ausgebildet.

### Bezugszeichenliste

- 10: erste Platte
- 12: Seitenfläche/Abschlussfläche
- 13: Kanten der aufzunehmenden Seitenfläche
- 14: Einklicknut
- 16: Entlastungsnut
- 18: verjüngende Anfasung
- 20: zweite Platte
- 22: Aufnahmenut
- 24: Unterseite der Aufnahmenut
- 26: Seitenflächen der Aufnahmenut
- 28: Ausbuchtung
- 30: öffnende Anfasung

## Patentansprüche

1. Verbindungsanordnung für Holzwerkstücke oder holzähnliche Werkstücke mit einer ersten Platte (10), die eine im Wesentlichen als Abschlussfläche ausgebildete Seitenfläche (12) aufweist, und eine zweite Platte (20), in die eine Aufnahmenut (22) mit der Dicke der ersten Platte (10) eingearbeitet ist, so dass die erste Platte (10) an einer ihrer Seiten in die Aufnahmenut (22) aufgenommen werden kann und die Unterseite (24) der Aufnahmenut (22) mit der Seitenfläche (12) eine Leim- oder Klebefläche ausbildet,
**dadurch gekennzeichnet, dass**
in der ersten Platte (10) in der Nähe der Kanten (13) der aufzunehmenden Seitenfläche (12) zumindest abschnittsweise auf beiden Flächen jeweils eine Einklicknut (14) oder Einbuchtung längs der Seitenfläche (12) eingearbeitet ist,
in der zweiten Platte (20) in den Seitenflächen (16) der Aufnahmenut (22) zumindest abschnittsweise jeweils eine Ausbuchtung (28) längs der Aufnahmenut (22) derart ausgebildet ist, dass sie die genannte Einklicknut (14) oder Einbuchtung der ersten Platte die genannte Ausbuchtung (28) der zweiten Platte (20) aufnehmen kann.

2. Verbindungsanordnung für Holzwerkstücke oder holzähnliche Werkstücke mit einer ersten Platte (10), die eine im Wesentlichen als Abschlussfläche ausgebildete Seitenfläche (12) aufweist, und eine zweite Platte (20), in die eine Aufnahmenut (22) mit der Dicke der ersten Platte (10) eingearbeitet ist, so dass die erste Platte (10) mit einer ihrer Seiten in die Aufnahmenut (22) aufgenommen werden kann und die Unterseite (24) der Aufnahmenut (22) mit der Seitenfläche (12) eine Leim- oder Klebefläche ausbildet,
**dadurch gekennzeichnet, dass**
in der ersten Platte (10) in der Nähe der Kanten (13) der aufzunehmenden Seitenfläche (12) zumindest abschnittsweise auf beiden Flächen jeweils eine Ausbuchtung längs der Seitenfläche (12) ausgebildet ist,
in der zweiten Platte (20) in den Seitenflächen (26) der Aufnahmenut (22) zumindest abschnittsweise jeweils eine Einklicknut oder Einbuchtung parallel zur Unterseite (24) der Aufnahmenut (22) derart eingearbeitet ist, dass die genannte Einklicknut oder Einbuchtung der zweiten Platte (20) die genannte Ausbuchtung der ersten Platte (10) aufnehmen kann.

3. Verbindungsanordnung nach Anspruch 1 oder 2, **dadurch gekennzeichnet, dass** an der aufzunehmenden Seite der ersten Platte (10) Mittel (16) ausgebildet sind, mit denen eine erhöhte Flexibilität der Bereiche gewährleistet ist, in denen jeweils die genannte Einklicknut (14) oder Einbuchtung bzw. die Ausbuchtung ausgebildet sind, wobei die genannten Mittel (16) vorzugsweise als Entlastungsnuten an der aufzunehmenden Seite ausgebildet sind.

4. Verbindungsanordnung nach einem der Ansprüche 1 bis 3, **dadurch gekennzeichnet, dass** die erste Platte (10) zwischen der Seitenfläche (12) und der genannten Einklicknut (14) oder Einbuchtung bzw. der Ausbuchtung über die Länge der Seitenfläche (12) verjüngend angefast (18) ist und/oder dass die zweite Platte (20) zwischen der Ausbuchtung (28) bzw. der Einklicknut oder Einbuchtung und der Plattenoberfläche öffnend angefast (30) ist.

5. Plattenförmiges Holzwerkstück (10) oder holzähnliches Werkstück, das eine im Wesentlichen als Abschlussfläche ausgebildete Seitenfläche (12) aufweist,
**dadurch gekennzeichnet, dass**
in dem Holzwerkstück oder holzähnlichen Werkstück in der Nähe der Seitenfläche (12) zumindest abschnittsweise auf beiden Seiten jeweils eine Einklicknut (14) oder Einbuchtung längs der Seitenfläche eingearbeitet ist.

6. Plattenförmiges Holzwerkstück oder holzähnliches Werkstück, das eine im Wesentlichen als Abschlussfläche ausgebildete Seitenfläche aufweist, **dadurch gekennzeichnet, dass**
in dem Holzwerkstück oder holzähnlichen Werkstück in der Nähe der Seitenfläche zumindest abschnittsweise auf beiden Seiten jeweils eine Ausbuchtung längs der Seitenfläche ausgebildet ist.

7. Plattenförmiges Holzwerkstück oder holzähnliches Werkstück nach Anspruch 5 oder 6, **dadurch gekennzeichnet, dass** an der Abschlussfläche Mittel (16) ausgebildet sind, mit denen eine erhöhte Flexibilität der Bereiche gewährleistet ist, in denen jeweils die genannte Einklicknut (14) oder Einbuchtung bzw. die Ausbuchtung ausgebildet sind, wobei die genannten Mittel (16) vorzugsweise als Entlastungsnuten in der genannten Abschlussfläche (12) ausgebildet sind.

8. Plattenförmiges Holzwerkstück (10) oder holzähnliches Werkstück nach einem der Ansprüche 5 bis 7, **dadurch gekennzeichnet, dass** sie zwischen der Abschlussfläche (12) und der genannten Einklicknut (14) oder Einbuchtung bzw. der Ausbuchtung über die Länge der Seitenfläche verjüngend angefast (18) ist.

9. Plattenförmiges Holzwerkstück (20) oder holzähnliches Werkstück, in das eine Aufnahmenut (22) eingearbeitet ist, so dass eine weitere Platte mit einer ihrer Längsseiten in die Aufnahmenut (22) aufgenommen werden kann und die Unterseite (24) der Aufnahmenut (22) mit einer Seitenfläche der weiteren Platte eine Leim- oder Klebefläche ausbildet,
**dadurch gekennzeichnet, dass**
in dem plattenförmiges Holzwerkstück (20) oder holzähnlichen Werkstück in den Seitenflächen (26) der Aufnahmenut (22) zumindest abschnittsweise jeweils eine Ausbuchtung (28) längs der der Aufnahmenut (22) ausgebildet ist.

10. Plattenförmiges Holzwerkstück (20) oder holzähnliches Werkstück, in das eine Aufnahmenut (22) eingearbeitet ist, so dass eine weitere Platte mit einer ihrer Längsseiten in die Aufnahmenut (22) aufgenommen werden kann und die Unterseite (24) der Aufnahmenut (22) mit einer Seitenfläche der weiteren Platte eine Leim- oder Klebefläche ausbildet,
**dadurch gekennzeichnet, dass**
in dem plattenförmiges Holzwerkstück oder holzähnlichen Werkstück in den Seitenflächen der Aufnahmenut zumindest abschnittsweise jeweils eine Einklicknut oder Einbuchtung längs der Aufnahmenut eingearbeitet ist.

11. Plattenförmiges Holzwerkstück oder holzähnliches Werkstück nach einem der Ansprüche 9 bis 10, **dadurch gekennzeichnet, dass** sie zwischen der Ausbuchtung (28) bzw. der Einklicknut oder Einbuchtung und der Plattenoberfläche öffnend angefast (30) ist.

12. Verfahren zum Verbinden von zwei plattenförmigen Holzwerkstücken (10, 20) oder holzähnlichen Werkstücken, wobei das erste Holzwerkstück (10) oder holzähnliche Werkstück eine im Wesentlichen als Abschlussfläche ausgebildete Seitenfläche (12) aufweist, und in das zweite Holzwerkstück (20) oder holzähnliche Werkstück eine Aufnahmenut (22) mit der Dicke des ersten Holzwerkstücks (10) oder holzähnlichen Werkstücks eingearbeitet ist, so dass das erste Holzwerkstück (10) oder holzähnliche Werkstück mit einer seiner Längsseiten in die Aufnahmenut (22) aufgenommen werden kann und die Unterseite (24) der Aufnahmenut (22) mit der Seitenfläche eine Leim-oder Klebefläche ausbildet, und wobei im ersten Holzwerkstück (10) oder holzähnlichen Werkstück in der Nähe der aufzunehmenden Seitenfläche (12) zumindest abschnittsweise auf beiden Seiten jeweils eine Einklicknut (14) oder Einbuchtung längs der Seitenfläche eingearbeitet ist, und im zweiten Holzwerkstück (20) oder holzähnlichen Werkstück in den Seitenflächen (26) der Aufnahmenut (22) zumindest abschnittsweise jeweils eine Ausbuchtung (28) längs der Aufnahmenut (22) derart ausgebildet ist, dass die genannte Einklicknut (14) oder Einbuchtung des ersten Holzwerkstücks (10) oder holzähnlichen Werkstücks die genannte Ausbuchtung (28) des zweiten Holzwerkstücks (20) oder holzähnlichen Werkstücks aufnehmen kann,
**gekennzeichnet durch die Schritte,**
- Beaufschlagen der genannten Seitenfläche (12) des ersten Holzwerkstücks (10) oder holzähnlichen Werkstücks und/oder der Unterseite (24) der Aufnahmenut (22) des zweiten Holzwerkstücks (20) oder holzähnlichen Werkstücks mit einem Leim oder Klebemittel, vorzugsweise eines aufschäumenden Klebstoffs,
- Einsetzen des ersten Holzwerkstücks (10) oder holzähnlichen Werkstücks mit einer Kante (13) der Seitenfläche derart in die Aufnahmenut (22) des zweiten Holzwerkstücks (20) oder holzähnlichen Werkstücks, eine Ausbuchtung (28) des zweiten Holzwerkstücks (20) oder holzähnlichen Werkstücks in eine Einklicknut (14) oder Einbuchtung des ersten Holzwerkstücks (10) oder holzähnlichen Werkstücks eingreift oder an ihr anliegt,
- Verkanten des ersten Holzwerkstücks (10) oder holzähnlichen Werkstücks derart, dass die andere Ausbuchtung (28) des zweiten Holzwerkstücks (20) oder holzähnlichen Werkstücks in die andere Einklicknut (14) oder Einbuchtung des ersten Holzwerkstücks (10) oder holzähnlichen Werkstücks einklickt.

13. Verfahren zum Verbinden von zwei plattenförmigen Holzwerkstücken oder holzähnlichen Werkstücken, wobei das erste Holzwerkstück oder holzähnliche Werkstück eine im Wesentlichen als Abschlussfläche ausgebildete Seitenfläche aufweist, und in das zweite Holzwerkstück oder holzähnliche Werkstück eine Aufnahmenut mit der Breite des ersten erste Holzwerkstücks oder holzähnlichen Werkstücks eingearbeitet ist, so dass das erste Holzwerkstück oder holzähnliche Werkstück mit einer seiner Längsseiten in die Aufnahmenut aufgenommen werden kann und die Unterseite der Aufnahmenut mit der Abschlussfläche der Seitenfläche eine Leim- oder Klebefläche ausbildet, und wobei im ersten Holzwerkstück oder holzähnlichen Werkstück in der Nähe der Seitenfläche zumindest abschnittsweise auf beiden Flächen jeweils eine Ausbuchtung ausgebildet ist, und im zweiten Holzwerkstück oder holzähnlichen Werkstück in den Seitenflächen der Aufnahmenut zumindest abschnittsweise jeweils eine Einklicknut oder Einbuchtung parallel zur Unterseite der Aufnahmenut derart eingearbeitet ist, dass die genannte Einklicknut oder Einbuchtung des zweiten Holzwerkstück oder holzähnlichen Werkstück die genannte Ausbuchtung des ersten Holzwerkstück oder holzähnlichen Werkstück aufnehmen kann,
**gekennzeichnet durch die Schritte,**
- Beaufschlagen der genannten Seitenfläche des ersten Holzwerkstücks oder holzähnlichen Werkstücks und/oder der Unterseite der Aufnahmenut des zweiten Holzwerkstücks oder holzähnlichen Werkstücks mit einem Leim oder Klebemittel, vorzugsweise eines aufschäumenden Klebstoffs,
- Einsetzen des ersten Holzwerkstücks oder holzähnlichen Werkstücks mit einer der Kanten der Seitenfläche derart in die Aufnahmenut des zweiten Holzwerkstücks oder holzähnlichen Werkstücks, dass eine Ausbuchtung (28) des ersten Holzwerkstücks oder holzähnlichen Werkstücks in eine Einklicknut oder Einbuchtung des zweiten Holzwerkstücks oder holzähnlichen Werkstücks eingreift oder an ihr anliegt,
- Verkanten des ersten Holzwerkstücks oder holzähnlichen Werkstücks derart, dass die andere Ausbuchtung des ersten Holzwerkstücks oder holzähnlichen Werkstücks in die andere Einklicknut oder Einbuchtung des zweiten Holzwerkstücks oder holzähnlichen Werkstücks einklickt.
